# EUROPEAN PATENT APPLICATION

(11) **EP 2 555 558 A1**
(43) Date of publication of application: **06.02.2013**
(21) Application number: 11762400.7
(22) Date of filing: 21.02.2011
(51) Int. Cl.: H04W 28/06, H04B 7/04, H04J 99/00, H04W 16/28

(54) **TRANSMITTER, RECEIVER, COMMUNICATION SYSTEM, COMMUNICATION METHOD, AND INTEGRATED CIRCUIT**

(30) Priority: 31.03.2010 JP 2010082469
(71) Applicant: Sharp Kabushiki Kaisha, Osaka-shi, Osaka 545-8522 (JP)
(72) Inventor: SHIMEZAWA Kazuyuki, Osaka 545-8522 (JP); NOGAMI, Toshizo, Osaka 545-8522 (JP)
(74) Representative: Müller - Hoffmann & Partner
(86) International application number: PCT/JP2011/053635
(87) International publication number: WO 2011/122160

(57) **Abstract**

To achieve high transmission efficiency by enabling the number of ports to be increased to the higher number than the conventional number of ports by efficient signaling in both SU-MIMO and MU-MIMO, in a transmission apparatus that transmits data by a spatial multiplexing transmission scheme, a reference signal generation part 906 generates a reference signal to be transmitted with a data signal, a control information generation part 911 generates a control signal including port and power offset information indicative of a combination of information indicative of the reference signal and power offset information of the reference signal and the data signal, and the generated reference signal and control signal are transmitted from a transmission antenna 909.

## Description

### Technical Field

The present invention relates to techniques for performing communications using reference signals, and more particularly, to a transmission apparatus, reception apparatus, communication system, communication method and integrated circuit for enabling MIMO transmission to be performed efficiently.

### Background Art

In mobile wireless communication systems such as WCDMA (Wideband Code Division Multiple Access), LTE (Long Term Evolution), LTE-A (LTE-Advanced) and WiMAX (Worldwide Interoperability for Microwave Access) by the 3GPP (Third Generation Partnership Project), it is possible to expand the communication area by adopting a cellular configuration in which a plurality of areas covered by base stations (base station apparatus, transmission station, transmission apparatus, eNodeB) or transmission stations in conformance with the base stations is arranged in a cell form. Further, by adaptively controlling the modulation scheme and coding rate (MCS; Modulation and Coding Scheme), spatial multiplexing number (layers, rank), precoding weights (precoding matrix) and the like, it is possible to actualize more efficient data transmission. Non-patent Document 1 shows methods for performing these kinds of control.

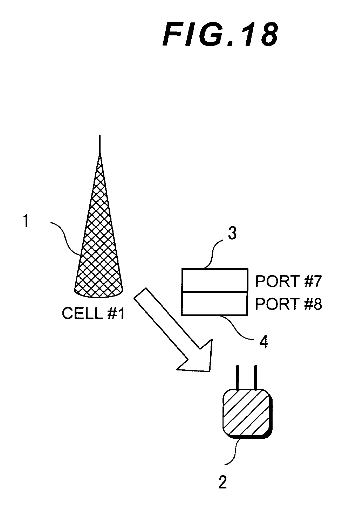

FIG. 18 is a diagram showing an example of downlink SU (Single User)-MIMO (Multiple Input Multiple Output, spatial multiplexing transmission) (first transmission scheme) transmission in a transmission mode using the dual layer beam forming scheme of LTE. A base station 1 transmits a codeword 3 and codeword 4 that are two pieces of transmission data to a terminal apparatus 2 to the terminal apparatus 2, using ports #7 and #8 that are two ports (logical ports) subjected to spatial multiplexing. Herein, reference signals of the ports #7 and #8 are multiplied by mutually orthogonal spreading codes to enable the terminal apparatus 2 to easily divide the reference signals of the ports #7 and #8.

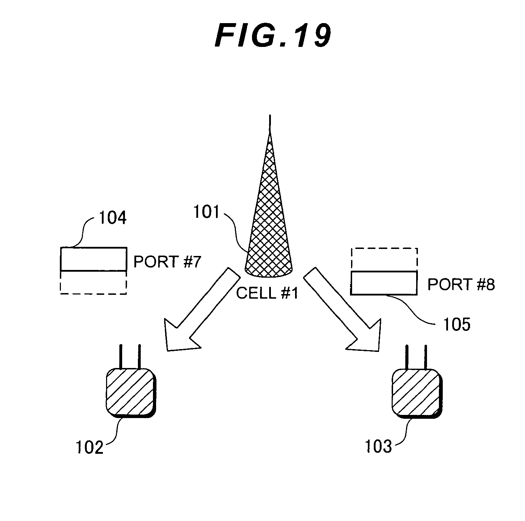

FIG. 19 is a diagram showing an example of downlink MU (Multiple User)-MIMO (second transmission scheme) transmission in a transmission mode using the dual layer beam forming scheme of LTE. A base station 101 transmits a codeword 104 that is transmission data to a terminal apparatus 102 and a codeword 105 to a terminal apparatus 103 to the terminal apparatuses 102 and 103 at the same time using the same frequency, using ports #7 and #8 that are two ports subjected to spatial multiplexing as shown in Non-patent Document 2. Herein, reference signals of the ports #7 and #8 are multiplied by mutually orthogonal spreading codes, while the terminal apparatus is capable of knowing a port including the transmission data to the terminal apparatus using downlink control information, and the terminal apparatuses 102 and 103 are capable of dividing the reference signals of the ports #7 and #8 with ease, while being capable of performing demodulation using the reference signal associated with the port to the terminal apparatus to extract the transmission data.

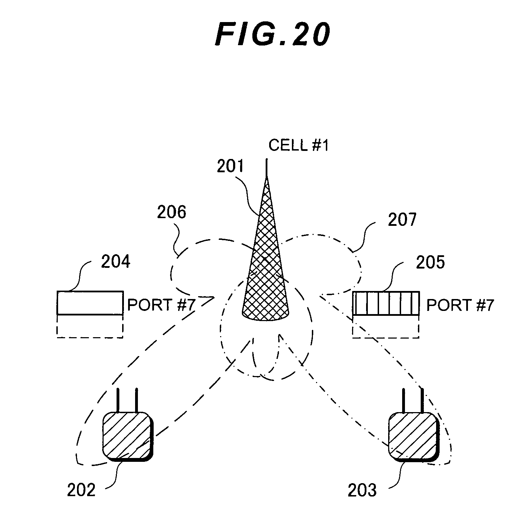

FIG. 20 is a diagram showing another example of downlink MU-MIMO transmission in a transmission mode using the dual layer beam forming scheme of LTE. A base station 201 transmits a codeword 204 that is transmission data to a terminal apparatus 202 and a codeword 205 to a terminal apparatus 203 to the terminal apparatuses 202 and 203 at the same time using the same frequency, using the port #7 that is one of two ports subjected to spatial multiplexing.

Herein, the codewords 204 and 205 are transmitted using the same port #7, and it is possible to set different directivity patterns of the signals for transmitting respective transmission data. More specifically, the codeword 204 is transmitted using a first directivity pattern 206, and the codeword 205 is transmitted using a second directivity pattern 207. The reference signal for the terminal apparatus 202 and the reference signal for the terminal apparatus 203 are multiplied by scrambling codes that are mutually quasi-orthogonal, and the terminal apparatuses 202 and 203 are notified of information indicative of respective scrambling codes via downlink control information. By this means, using the difference in the directivity pattern and the difference in the scrambling code, the terminal apparatuses 202 and 203 are capable of dividing reference signals of the port #7 into respective reference signals for the apparatuses 202 and 203.

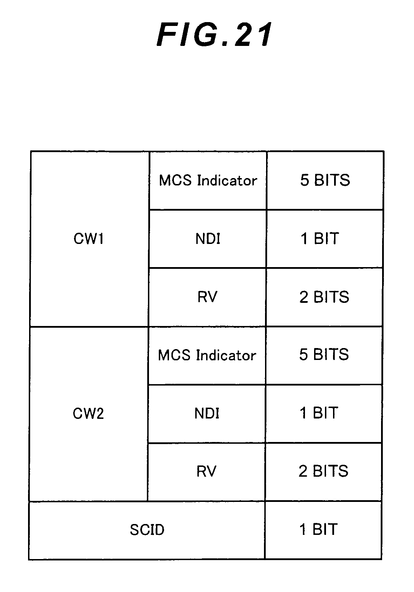

FIG. 21 is a table showing a part of the downlink control information in LTE. Herein, a codeword (CW) is a cluster of transmission data. A part of the downlink control information in LTE includes one bit of SCID (Scramble Code Identification) indicative of the type of scrambling code as shown in Non-patent Document 3, in addition to 16 bits of information (information indicative of parameters of CW) related to CW1 and CW2 that are CWs. For each of the CWs, an MCSI (MCS indicator) indicative of MCS (Modulation and Coding Scheme) is represented by 5 bits, an NDI (New Data Indicator) indicating whether or not transmission is first transmission is represented by 1 bit, and a RV (Redundancy Version) indicative of a puncturing pattern is represented by 2 bits.

In LTE, it is possible to transmit CWs to maximum four terminal apparatuses by MU-MIMO, by multiplying two ports as shown in FIG. 19 by two scrambling codes by the SCID of 1 bit as shown in FIG. 21, respectively, as shown in FIG. 20. Meanwhile, in LTE-A that is expansion of LTE, as described in Non-patent Document 4, it is studied to increase the maximum multiplexing number of MIMO to "8" while maintaining backward compatibility with LTE.

### Prior Art Document

### Non-patent Document

Non-patent Document 1: 3rd Generation Partnership Project (3GPP); Technical Specification Group (TSG) Radio Access Network (RAN); Evolved Universal Terrestrial Radio Access (E-UTRA); Physical layer procedures (Release 8), 2008, December, 3GPP TS 36.213 V8.8.0 (2009-9)
Non-patent Document 2: 3GPP TSG-RAN WG1 #58bis, R1-094413, "Way forward on the details of DCI format 2B for enhanced DL transmission", 2009, October
Non-patent Document 3: 3GPP TSG-RAN WG1 #58bis, R1-094408, "Way forward on DMRS sequence generation for dual layer SM", 2009, October
Non-patent Document 4: 3GPP TR 36.814 V1.5.2, "Further Advancements for E-UTRA Physical Layer Aspects", 2009, December

### Disclosure of Invention

### Problems to be Solved by the Invention

However, signaling in conventional systems is not capable of supporting ports more than the number of ports expected in the conventional systems, makes it difficult to increase ports, and has become the factor for preventing transmission efficiency from being improved. Particularly, it is necessary to efficiently perform control in the case of dynamically switching between SU-MIMO and MU-MIMO.

The present invention was made in view of such circumstances, and it is an object of the invention to provide a transmission apparatus, reception apparatus, communication system, communication method and integrated circuit for enabling the number of ports to be increased to the higher number than the conventional number of ports by efficient signaling in both SU-MIMO and MU-MIMO, and thereby achieving high transmission efficiency.

### Means for Solving the Problem

(1) To attain the aforementioned object, the present invention took measures as described below. In other words, a transmission apparatus of an embodiment of the invention is a transmission apparatus that transmits data by a spatial multiplexing transmission scheme for spatially multiplexing a plurality of ports, and is characterized by generating a reference signal to be transmitted with a data signal, while generating a control signal including port information indicative of at least one of the ports and power information of the data signal, and transmitting the generated reference signal and control signal with a port indicated by the port information.

Thus, the transmission apparatus generates a reference signal to be transmitted with a data signal, while generating a control signal including the port information indicative of at least one port and the power information of the data signal, and is thereby capable of performing flexible efficient signal transmission. By this means, the base station is capable of achieving efficient scheduling, and it is thereby possible to improve spectrum efficiency.

(2) Further, in the transmission apparatus of an embodiment of the invention, it is a feature that the control signal includes data signal identification information that is a combination of the port information and the power information.

Thus, the control signal includes the data signal identification information that is a combination of the port information and the power information, and it is thereby possible to perform flexible efficient signal transmission. By this means, the base station is capable of achieving efficient scheduling, and it is thereby possible to improve spectrum efficiency.

(3) Furthermore, in the transmission apparatus of an embodiment of the invention, it is a feature that the power information is power offset information of the reference signal and the data signal.

Thus, the power information is information indicative of power of the data signal, and it is thereby possible to perform flexible efficient signal transmission. By this means, the base station is capable of achieving efficient scheduling, and it is thereby possible to improve spectrum efficiency.

(4) Still Furthermore, in the transmission apparatus of an embodiment of the invention, it is a feature that the power information is information indicative of reference amplitude of the data signal.

Thus, the power information is the information indicative of reference amplitude of the data signal, and it is thereby possible to perform flexible efficient signal transmission. By this means, the base station is capable of achieving efficient scheduling, and it is thereby possible to improve spectrum efficiency.

(5) Moreover, in the transmission apparatus of an embodiment of the invention, it is a feature that the data signal identification information further includes information indicative of the spatial multiplexing number of the data signal.

Thus, the data signal identification information further includes the information indicative of the spatial multiplexing number of the data signal, and the transmission apparatus is thereby capable of performing flexible efficient signal transmission. By this means, the base station is capable of achieving efficient scheduling, and it is thereby possible to improve spectrum efficiency.

(6) Further, in the transmission apparatus of an embodiment of the invention, it is a feature that the port is indicated using the data signal identification information and information indicative of parameters for each codeword that is a cluster of data signals, when the spatial multiplexing number of the data signal is "1" or "2".

Thus, the port is indicated using the data signal identification information and the information indicative of parameters for each codeword that is a cluster of data signals when the spatial multiplexing number of the data signal is "1" or "2", it is thereby possible to make the information amount of control information the same in both SU-MIMO transmission and MU-MIMO transmission, and it is thus possible to make the detection (blind decoding) method of the control information (PDCCH) the same irrespective of the transmission scheme. By this means, it is possible to perform reception control efficiently.

(7) Further, a reception apparatus of an embodiment of the invention is a reception apparatus that receives data transmitted by a spatial multiplexing transmission scheme for spatially multiplexing a plurality of ports, and is characterized by receiving a reference signal transmitted with a data signal, while receiving a control signal including port information indicative of at least one of the ports and power information of the data signal, and identifying the reference signal and the data signal using the control signal.

Thus, the reception apparatus receives a reference signal transmitted with a data signal, while receiving a control signal including the port information indicative of at least one of the ports and the power information of the data signal, and identifies the reference signal and the data signal using the control signal, and it is thereby possible to perform flexible efficient signal transmission. By this means, the base station is capable of achieving efficient scheduling, and it is thereby possible to improve spectrum efficiency.

(8) Furthermore, in the reception apparatus of an embodiment of the invention, it is a feature that the control signal includes data signal identification information that is a combination of the port information and the power information.

Thus, the control signal includes the data signal identification information that is a combination of the port information and the power information, and it is thereby possible to perform flexible efficient signal transmission. By this means, the base station is capable of achieving efficient scheduling, and it is thereby possible to improve spectrum efficiency.

(9) Still furthermore, in the reception apparatus of an embodiment of the invention, it is a feature that the power information is power offset information of the reference signal and the data signal.

Thus, the power information is information indicative of power of the data signal, and it is thereby possible to perform flexible efficient signal transmission. By this means, the base station is capable of achieving efficient scheduling, and it is thereby possible to improve spectrum efficiency.

(10) Moreover, in the reception apparatus of an embodiment of the invention, it is a feature that the power information is information indicative of reference amplitude of the data signal.

Thus, the power information is the information indicative of reference amplitude of the data signal, and it is thereby possible to perform flexible efficient signal transmission. By this means, the base station is capable of achieving efficient scheduling, and it is thereby possible to improve spectrum efficiency.

(11) Further, a communication system of an embodiment of the invention is a communication system in which a transmission apparatus transmits data to a reception apparatus by a spatial multiplexing transmission scheme for spatially multiplexing a plurality of ports, and is characterized in that the transmission apparatus generates a reference signal to be transmitted with a data signal, while generating a control signal including port and power offset information indicative of a combination of information indicative of the reference signal and power offset information of the reference signal and the data signal, and transmits the generated reference signal and control signal to the reception apparatus, and that the reception apparatus receives the reference signal transmitted with the data signal, while receiving the control signal including port and power offset information indicative of a combination of information indicative of the reference signal and power offset information of the reference signal and the data signal, and identifies the reference signal and the power offset information using the port and power offset information.

Thus, the transmission apparatus generates the control signal including the port and power offset information indicative of a combination of information indicative of the reference signal and power offset information of the reference signal and the data signal, and it thereby capable of performing flexible efficient signal transmission. By this means, the base station is capable of achieving efficient scheduling, and it is thereby possible to improve spectrum efficiency.

(12) Furthermore, a communication method of an embodiment of the invention is a communication method in a transmission apparatus that transmits data by a spatial multiplexing transmission scheme for spatially multiplexing a plurality of ports, and is characterized by including at least the steps of generating a reference signal to be transmitted with a data signal, generating a control signal including port and power offset information indicative of a combination of information indicative of the reference signal and power offset information of the reference signal and the data signal, and transmitting the generated reference signal and control signal.

Thus, the transmission apparatus generates the control signal including the port and power offset information indicative of a combination of information indicative of the reference signal and power offset information of the reference signal and the data signal, and is thereby capable of performing flexible efficient signal transmission. By this means, the base station is capable of achieving efficient scheduling, and it is thereby possible to improve spectrum efficiency.

(13) Still furthermore, a communication method of an embodiment of the invention is a communication method in a reception apparatus that receives data transmitted by a spatial multiplexing transmission scheme for spatially multiplexing a plurality of ports, and is characterized by including at least the steps of receiving a reference signal transmitted with a data signal, receiving a control signal including port and power offset information indicative of a combination of information indicative of the reference signal and power offset information of the reference signal and the data signal, and identifying the reference signal and the power offset information using the port and power offset information.

Thus, the reception apparatus receives the control signal including the port and power offset information indicative of a combination of information indicative of the reference signal and power offset information of the reference signal and the data signal, and the transmission apparatus is thereby capable of performing flexible efficient signal transmission. By this means, the base station is capable of achieving efficient scheduling, and it is thereby possible to improve spectrum efficiency.

(14) Further, an integrated circuit of an embodiment of the invention is an integrated circuit installed in a transmission apparatus to cause the transmission apparatus to exert a plurality of functions, and is characterized by causing the transmission apparatus to exert a series of functions of the functions of transmitting data by a spatial multiplexing transmission scheme for spatially multiplexing a plurality of ports, generating a reference signal to be transmitted with a data signal, generating a control signal including port and power offset information indicative of a combination of information indicative of the reference signal and power offset information of the reference signal and the data signal, and transmitting the generated reference signal and control signal.

Thus, the transmission apparatus generates the control signal including the port and power offset information indicative of a combination of information indicative of the reference signal and power offset information of the reference signal and the data signal, and is thereby possible to perform flexible efficient signal transmission. By this means, the base station is capable of achieving efficient scheduling, and it is thereby possible to improve spectrum efficiency.

(15) Furthermore, an integrated circuit of an embodiment of the invention is an integrated circuit installed in a reception apparatus to cause the reception apparatus to exert a plurality of functions, and is characterized by causing the reception apparatus to exert a series of functions of the functions of receiving data transmitted by a spatial multiplexing transmission scheme for spatially multiplexing a plurality of ports, receiving a reference signal transmitted with a data signal, receiving a control signal including port and power offset information indicative of a combination of information indicative of the reference signal and power offset information of the reference signal and the data signal, and identifying the reference signal and the power offset information using the port and power offset information.

Thus, the reception apparatus receives the control signal including the port and power offset information indicative of a combination of information indicative of the reference signal and power offset information of the reference signal and the data signal, and the transmission apparatus is thereby capable of performing flexible efficient signal transmission. By this means, the base station is capable of achieving efficient scheduling, and it is thereby possible to improve spectrum efficiency.

### Advantageous Effect of the Invention

According to the invention, it is possible to achieve high transmission efficiency by enabling the number of ports to be increased to the higher number than the conventional number of ports by efficient signaling.

### Brief Description of Drawings

FIG. 1 is a block diagram showing an example of a configuration of a base station 301 (transmission apparatus) according to the invention;
FIG. 2 is a block diagram showing an example of a configuration of a terminal apparatus 302 (reception apparatus) according to the invention;
FIG. 3 is a schematic configuration diagram illustrating a configuration of a communication system according to Embodiment 1 of the invention;
FIG. 4 is a diagram showing the case where the base station 301 performs SU-MIMO multiplexing on CWs to one terminal apparatus 302e to transmit according to Embodiment 1 of the invention;
FIG. 5 is a diagram showing the case where the base station 301 performs SU-MIMO multiplexing on CWs to one terminal apparatus 302f to transmit according to Embodiment 1 of the invention;
FIG. 6 is a schematic configuration diagram illustrating a downlink radio frame configuration of the invention;
FIG. 7 is a diagram showing details of two RBs aligned as a subframe on the time axis in FIG. 6 in Embodiment 1 of the invention;
FIG. 8 is another diagram showing details of two RBs aligned as a subframe on the time axis in FIG. 6 in Embodiment 1 of the invention;
FIG. 9 is still another diagram showing details of two RBs aligned as a subframe on the time axis in FIG. 6 in Embodiment 1 of the invention;
FIG. 10 is a diagram showing resource elements (resources) and respective power in using eight ports of ports #7 to #14 in Embodiment 1 of the invention;
FIG. 11 is a diagram showing an example of control information of the invention;
FIG. 12 is a diagram showing an example of states capable of being notified by port and power offset information in the control information of the invention;
FIG. 13A is a diagram illustrating power of reference signals and PDSCHs associated with assignment of ports #7 and #11 in Embodiment 1 of the invention;
FIG. 13B is a diagram illustrating power of reference signals and PDSCHs associated with assignment of ports #7, #9 and #11 in Embodiment 1 of the invention;
FIG. 13C is another diagram illustrating power of reference signals and PDSCHs associated with assignment of ports #7, #9 and #11 in Embodiment 1 of the invention;
FIG. 14 is a table showing an example of parameters for each CW and ports associated therewith in the case where ports designated by the port and power offset information are ports #7 and #8 in Embodiment 1 of the invention;
FIG. 15 is a diagram showing details of two RBs aligned as a subframe on the time axis in FIG. 6 in Embodiment 2 of the invention;
FIG. 16A is a diagram showing an example illustrating power of reference signals and PDSCHs in the case of assigning an OFDM symbol including demodulation reference signals and PDSCHs in Embodiment 2 of the invention;
FIG. 16B is a diagram showing an example illustrating power of PDSCHs in the case of assigning an OFDM symbol including only PDSCHs in Embodiment 2 of the invention;
FIG. 16C is a diagram showing an example illustrating power of reference signals and PDSCHs in the case of assigning an OFDM symbol including reference signals specific to the base station 301 of ports #0 and #1 and PDSCHs in Embodiment 2 of the invention;
FIG. 17 is a diagram showing an example illustrating assignment of ports and power of reference signals and PDSCHs associated therewith in Embodiment 3 of the invention;
FIG. 18 is a diagram showing an example of downlink SU (Single User)-MIMO (Multiple Input Multiple Output, spatial multiplexing transmission) (first transmission scheme) transmission in a transmission mode using the dual layer beam forming scheme of LTE;
FIG. 19 is a diagram showing an example of downlink MU (Multiple User)-MIMO) (second transmission scheme) transmission in a transmission mode using the dual layer beam forming scheme of LTE;
FIG. 20 is a diagram showing another example of downlink MU-MIMO transmission in a transmission mode using the dual layer beam forming scheme of LTE; and
FIG. 21 is a table showing a part of downlink control information in LTE.

### Best Mode for Carrying Out the Invention

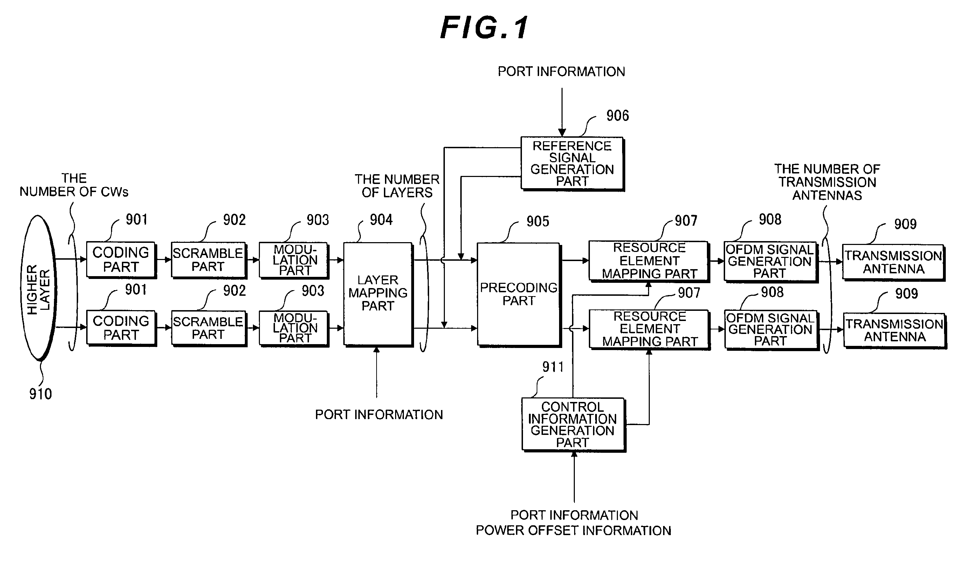

Embodiments of the invention will be described below with reference to drawings. Described first are configurations of a base station 301 and terminal apparatus 302. FIG. 1 is a block diagram showing an example of a configuration of the base station 301 (transmission apparatus) according to the invention. A coding part 901 performs error correction coding and rate matching processing on each of information data (bit sequences) for each CW transmitted from a higher layer 910, a scramble part 902 multiplies (superimposes) a scrambling code, and a modulation part 903 performs modulation processing of PSK modulation, QAM modulation or the like on the resultant. A layer mapping part 904 allocates modulation symbol sequences output from the modulation part 903 for each layer by referring to port information. A reference signal generation part 906 generates reference signal sequences for each port by referring to the port information. A precoding part 905 performs precoding processing on modulation symbol sequences for each layer, while performing precoding on reference signal sequences for each port generated in the reference signal generation part 906, and thereby generates reference signals. More specifically, the part 905 multiplies the modulation symbol sequence or reference signal by a precoding matrix.

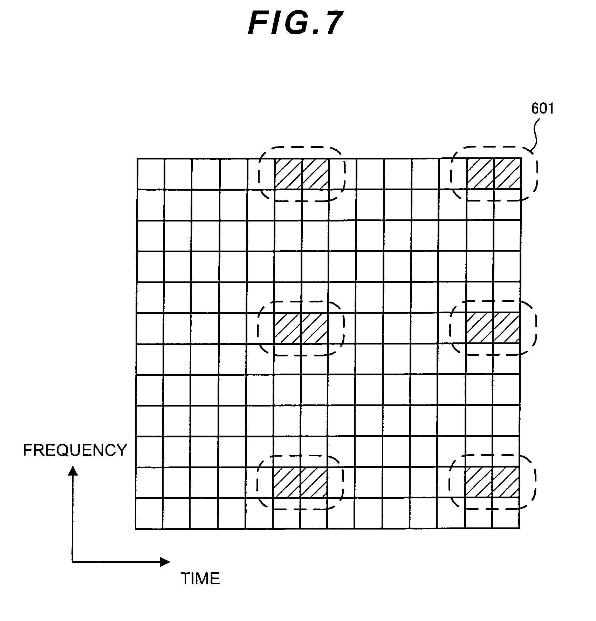

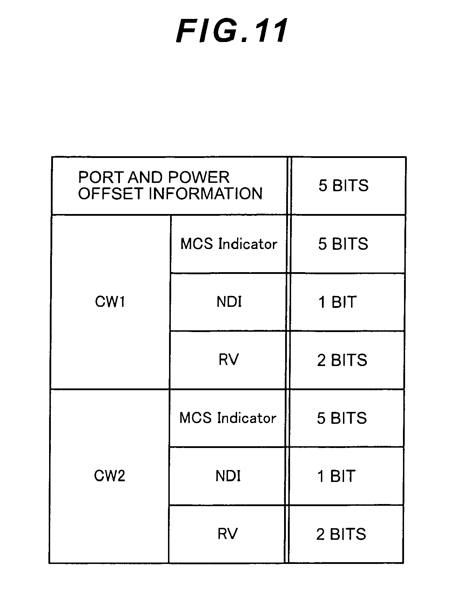

A control information generation part 911 generates control information (downlink control information, PDCCH), which will be described in FIG. 11, using the port information and power offset information. A resource element mapping part 907 maps the modulation symbol sequences and reference signals that are precoded in the precoding part 905 and the control information generated in the control information generation part 911 to predetermined resource elements. Herein, when the reference signals are mapped, it is possible to apply multiplexing methods as shown in FIGs. 7 to 9 so as to mutually orthogonalize reference signals for each port. A resource block group output from the resource element mapping part 907 is transformed into an OFDM signal in an OFDM signal generation part 908, and the OFDM signal is transmitted from a transmission antenna 909 as a downlink transmission signal.

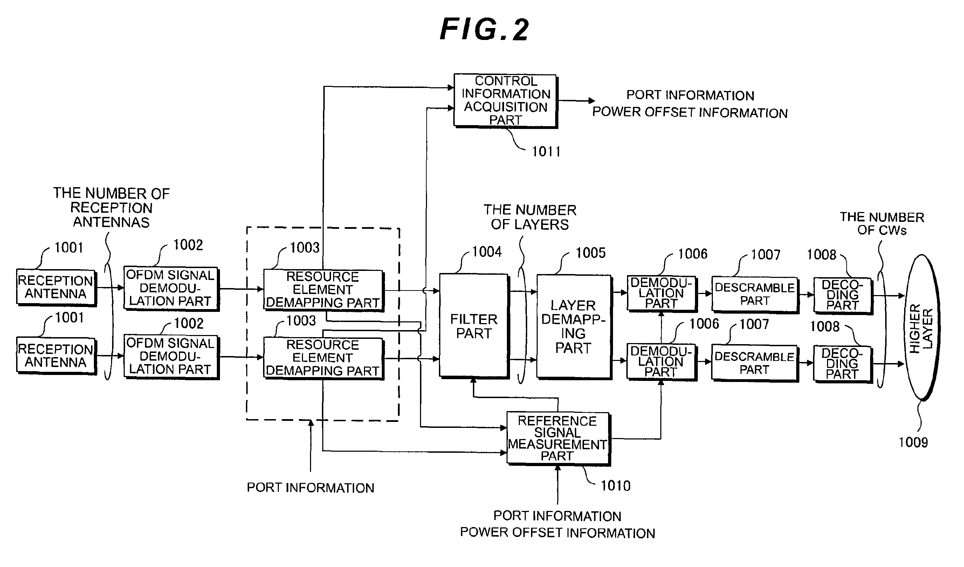

FIG. 2 is a block diagram showing an example of a configuration of the terminal apparatus 302 (reception apparatus) according to the invention. An OFDM signal demodulation part 1002 performs OFDM demodulation processing on a downlink reception signal received in a reception antenna 1001 to output the resource block group. A resource element demapping part 1003 first demaps the control information, a control information acquisition part 1011 acquires the port information and power offset information from the control signal, and the information is set inside the terminal apparatus 302. Herein, as a method of identifying the control information to the mobile terminal, it is possible to use various methods, and as an example thereof, described is a method using blind decoding. In this method, for example, the base station 301 side adds information for identifying the mobile terminal as CRC (Cyclic Redundancy Check) to the control information to the mobile terminal, and the mobile terminal demodulates all control information having the possibility, and is thereby capable of identifying the control information to the mobile terminal.

Next, the resource element demapping part 1003 acquires reference signals from resource elements in predetermined positions by referring to the port information to output to a reference signal measurement part 1010, while outputting reception signals in resource elements except the resource elements to which the reference signals are mapped to a filter part 1004. Herein, in acquiring the reference signals, the part 1003 performs processing associated with the processing in the resource element mapping parts 907. More specifically, when TDM, FDM, CDM or the like is applied so as to mutually orthogonalize the reference signals for each port in the resource element mapping parts 907, the part 1003 performs demapping or despreading in consideration thereof.

The reference signal measurement part 1010 multiplies the reference signal for each port output from the resource element demapping part 1003 by a sequence (sequence of complex conjugate of the reference signal sequence, etc.) associated with the reference signal sequence for each port generated in the reference signal generation part 906, and thereby measures a channel (propagation channel, transmission channel) for each port. Herein, since the reference signal is precoded in the transmission apparatus, the part 1010 measures equivalent channels including precoding processing in addition to the channel between the transmission antenna and the reception antenna. Further, based on the power offset information, the part 1010 performs the power offset processing of the reference signal and the PDSCH, and measures channels for each port.

The filter part 1004 performs filtering processing on the reception signal output from the resource element demapping part 1003, using estimated channel information output from the reference signal measurement part 1010. The layer demapping part 1005 performs combining processing associated with the layer mapping part 904, and transforms signals for each layer into signals for each CW. A demodulation part 1006 performs demodulation processing associated with the modulation processing in the modulation part 903 on the transformed signals for each CW, a descramble part 1007 multiplexes the resultant by complex conjugate of the scrambling code used in the scramble part 902 or divides the resultant by the scrambling code, and then, a decoding part 1008 performs rate dematching processing and error correction decoding processing to acquire information data for each CW, and outputs the data to a higher layer 1009. Herein, in the filtering processing performed by the filtering part 1004, on the reception signals for each reception antenna 1001, using methods of ZF (Zero Forcing), MMS (Minimum Mean Square Error), MLD (Maximum Likelihood Detection) and the like, the transmission signals for each layer (port) in FIG. 1 are detected.

### (Embodiment 1)

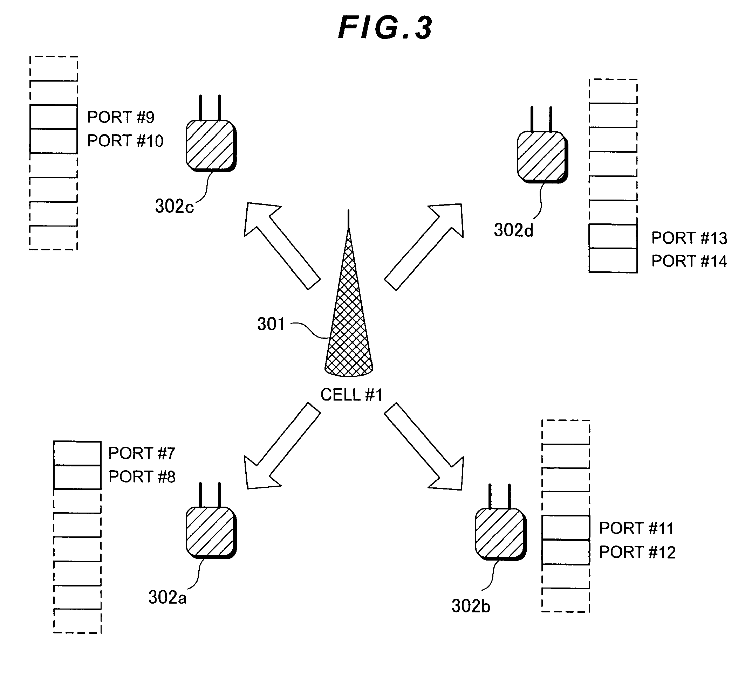

FIG. 3 is a schematic configuration diagram illustrating a configuration of a communication system according to Embodiment 1 of the invention. The communication system of FIG. 3 includes a base station (transmission apparatus, base station apparatus, eNodeB, eNB, cell, uplink reception apparatus, downlink transmission apparatus) 301 constituting a cell #1, and terminal apparatuses (reception apparatuses, UEs, uplink transmission apparatuses, downlink reception apparatuses) 302a to 302d (hereinafter, terminal apparatuses 302a to 302f are collectively called and expressed by the terminal apparatus 302), and is comprised thereof. The base station 301 transmits CWs (Codewords) that are transmission data to respective terminal apparatuses 302 of terminal apparatuses 302 by spatial multiplexing of MU-MIMO.

In this Embodiment, described is the case where the base station 301 performs MU-MIMO multiplexing on CWs to maximum four terminal apparatuses 302, using eight ports of ports #7 to #14. At this point, the station 301 assigns either of four pairs of ports #7 and #8, ports #9 and 10, ports #11 and #12, and ports #13 and #14 to each terminal apparatus 302. Therefore, one terminal apparatus 302 is capable of performing MU-MIMO communications using maximum two ports i.e. with the maximum spatial multiplexing number (rank) being "2". In the example of FIG. 3, the case is shown where the base station 301 transmits two CWs to each of the terminal apparatuses 302 using two ports, respectively. Further, the base station 301 transmits, to each terminal apparatus 302, information for specifying ports used in transmission of CWs to the terminal apparatus 302 and power offset information of a data signal demodulation reference signal and a data signal.

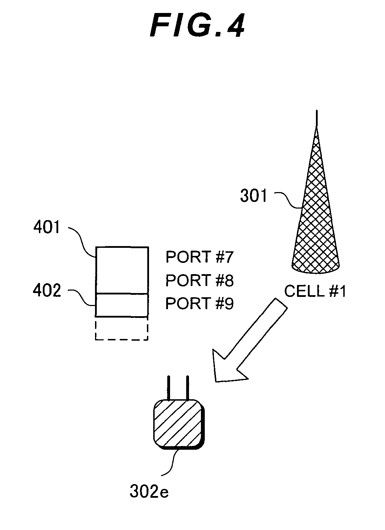

FIG. 4 is a diagram showing the case where the base station 301 performs SU-MIMO multiplexing on CWs to one terminal apparatus 302e to transmit according to Embodiment 1 of the invention. CWs 401 and 402 to the terminal apparatus 302e are transmitted respectively using ports #7 and 8, and the port #9. The base station 301 transmits, to the terminal apparatus 302e, control information including information (rank information) for specifying ports used in transmission of CWs to the terminal apparatus 302e.

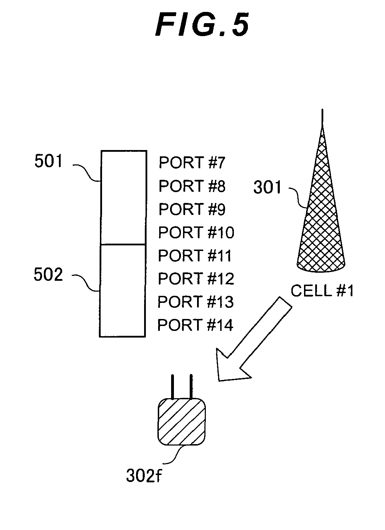

FIG. 5 is a diagram showing the case where the base station 301 performs SU-MIMO multiplexing on CWs to one terminal apparatus 302f to transmit according to Embodiment 1 of the invention. CWs 501 and 502 to the terminal apparatus 302f are transmitted respectively using ports #7 to 10 and ports #11 to 14. The base station 301 transmits, to the terminal apparatus 302f, control information including information (rank information) for specifying ports used in transmission of CWs to the terminal apparatus 302f.

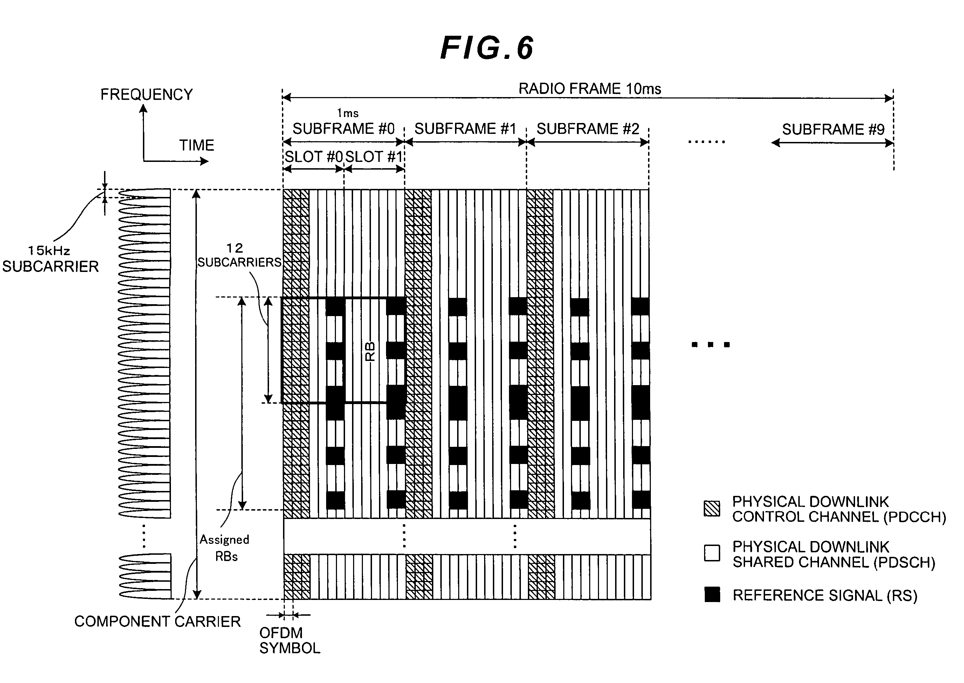

FIG. 6 is a schematic configuration diagram illustrating a downlink radio frame configuration of the invention. The horizontal axis and vertical axis in FIG. 6 respectively represent time and frequency. On the time axis, the radio frame is of 10 ms, one radio frame includes 10 subframes, each subframe includes 2 slots, and each slot includes 7 OFDM (Orthogonal Frequency Division Multiplexing) symbols. A plurality of subcarriers is arranged at intervals of 15 kHz on the frequency axis. A unit comprised of one slot in the time-axis direction and 12 subcarriers in the frequency axis-direction is a RB (Resource Block), and the RB is a unit for assignment of transmission data.

In the case of SU-MIMO, one or more CWs are assigned to one or more RBs to be spatially multiplexed using one or more ports. Meanwhile, in the case of MU-MIMO, CWs to a plurality of terminal apparatuses 302 is assigned to one or more RBs to be spatially multiplexed using one or more ports. At this point, the RBs allocated to respective terminal apparatuses 302 may be set independently of one another. Each subframe includes PDCCHs (Physical Downlink Control CHannels) that are regions to which the downlink control information is mapped, PDSCHs (Physical Downlink Shared CHannels) to which downlink transmission data is mapped, and RSs (Reference Signals, Demodulation Reference Signals, DM-RSs, UE-specific reference signals, UE-RSs, Precoded RSs, pilot signals) that are reference signals to demodulate the PDSCHs. Hereinafter, the RS that is the reference signal to demodulate the PDSCH is simply referred to as the reference signal or RS.

The RS is a reference signal specific to the terminal apparatus 302, is subjected to the same precoding processing as the PDSCH to which is assigned the transmission data to the terminal apparatus 302, and is inserted in the RB allocated to the transmission data to the terminal apparatus 302. The RS is used in MIMO division and demodulation of the PDSCH. Further, the RSs are set separately for each port, and are inserted to be mutually orthogonal or quasi-orthogonal among ports. When the number of used ports is different between RBs, the number of inserted RSs is different also. As a method of multiplexing RSs among ports, it is possible to use TDM (Time Division Multiplexing) for mapping to different OFDM symbols, FDM (Frequency Division Multiplexing) for mapping to different subcarriers, and CDM (Code Division Multiplexing) for superimposing different spreading codes. Alternatively, it is possible to these multiplexing methods in a complex manner. Hereinafter, the case is described where FDM and CDM are both used as the method of multiplexing RSs among ports.

FIG. 7 is a diagram showing details of two RBs aligned as a subframe on the time axis in FIG. 6 in Embodiment 1 of the invention. As described previously, one RB is comprised of 7 OFDM symbols on the time axis and 12 subcarriers on the frequency axis, and has 84 REs (Resource Elements) each of which is a region comprised of one OFDM symbol and one subcarrier. FIG. 7 shows an RS configuration in the case of one port (for example, port #7) or two ports (for example, ports #7 and #8), and 12 REs shaded by diagonal lines in FIG. 7 are REs to map the RS. In the case of one port, the sequence (spreading code) for the port #7 is mapped to 12 REs of diagonal-line portions. In the case of two ports, different sequences respectively for ports #7 and #8 are mapped to 12 REs of diagonal-line portions. At this point, the different sequences respectively for ports #7 and #8 are mapped to adjacent two REs in the RS configuration. Thus mapped reference signals 601 are subjected to CDM by spreading codes of two chips (for example, OCC (Orthogonal Cover Code), etc.), and are divided by despreading on the terminal apparatus 302 side.

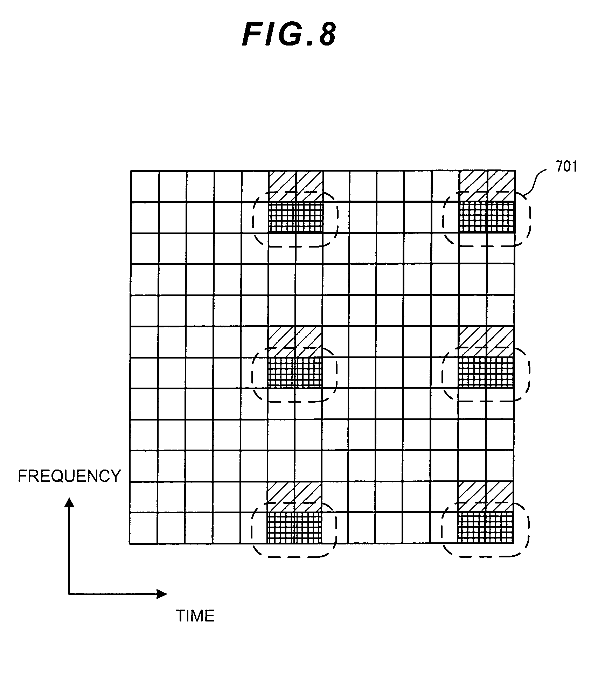

FIG. 8 is another diagram showing details of two RBs aligned as a subframe on the time axis in FIG. 6 in Embodiment 1 of the invention. FIG. 8 shows an RS configuration in the case of three ports (for example, ports #7, #8 and #9) or four ports (for example, ports #7, #8, #9 and #10), and 24 REs of shaded portions (12 shaded portions by diagonal lines and 12 grid-shaped shaded portions) are REs to map the RS. In the case of three ports, in addition to the ports #7 and #8 as shown in FIG. 7, the sequence for the port #9 is mapped to 12 REs of grid-shaped shaded portions. In other words, the port #7 (port #8) and port #9 are multiplexed by FDM. In the case of four ports, different sequences respectively for ports #9 and #10 are mapped to 12 REs of grid-shaped shaded portions. At this point, the different sequences (spreading codes) respectively for ports #9 and #10 are mapped to adjacent two REs in the RS configuration. Thus mapped reference signals 701 are subjected to CDM of 2-chip spreading, and are divided by despreading on the terminal apparatus 302 side.

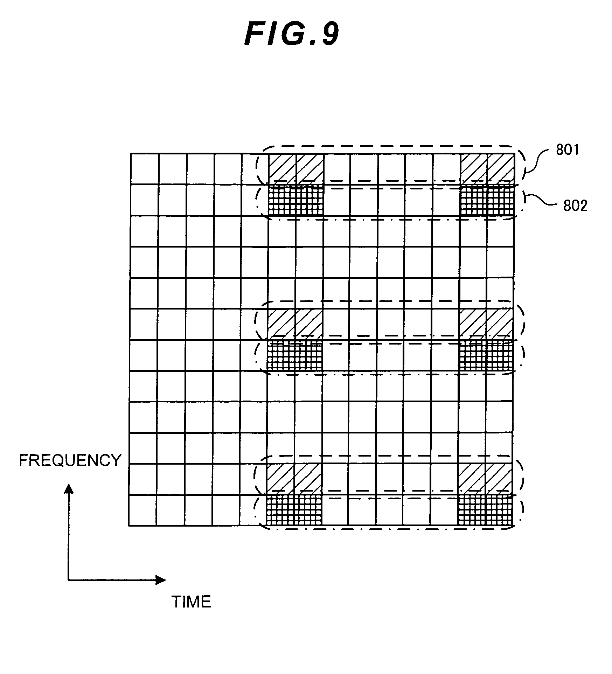

FIG. 9 is still another diagram showing details of two RBs aligned as a subframe on the time axis in FIG. 6 in Embodiment 1 of the invention. FIG. 9 shows an RS configuration in the case of eight ports (for example, ports #7 to #14), and 24 REs of shaded portions (12 shaded portions by diagonal lines and 12 grid-shaped shaded portions) are REs to map the RS. Different sequences respectively for ports #7, #8, #11 and #12 are mapped to 12 REs of shaded portions by diagonal lines.

At this point, the different sequences respectively for ports #7, #8, #11 and #12 are mapped to four REs in the same frequencies in the RS configuration. Thus mapped reference signals 801 are subjected to CDM of 4-chip spreading, and are divided by despreading on the terminal apparatus 302 side. Similarly, different sequences respectively for ports #9, #10, #13 and #14 are mapped to 12 REs of grid-shaped shaded portions. At this point, the different sequences respectively for ports #9, #10, #13 and #14 are mapped to four REs in the same frequencies in the RS configuration. Thus mapped reference signals 802 are subjected to CDM of 4-chip spreading, and are divided by despreading on the terminal apparatus 302 side.

Herein, the sequence of each port in FIGs. 7 to 9 is obtained by superimposing an orthogonal code sequence and quasi- orthogonal code sequence, and the like. In addition, the assignment sequence for each port and RE mapping is not limited to combinations as described above, and it is possible to use various combinations. In addition, herein, described is the case of using ports #9 and #10, etc. in addition to ports #7 and #8, and it is possible set whether or not to use each port independently of one another. Further, when only either or both of ports #9 and #10 are used, it is also possible not to map ports #7 and #8.

Herein, a set of ports to map to the same RB or two RBs aligned as a subframe on the time axis is assumed to be a port group. For example, in the example described in FIG. 7, the ports #7 and #8 are assumed to be the first port group. In the example described in FIG. 8, the ports #7 and #8 are assumed to be the first port group, and the ports #9 and #10 are assumed to be the second port group. In the example described in FIG. 9, the ports #7, #8, #11 and #12 are assumed to be the first port group, and the ports #9, #10, #13 and #14 are assumed to be the second port group. In addition, in ports to map to the same RB or two RBs aligned as a subframe on the time axis, when the quasi-orthogonal code such as a scramble code is further superimposed on the orthogonal code, port groups may be set for each superimposed quasi-orthogonal code.

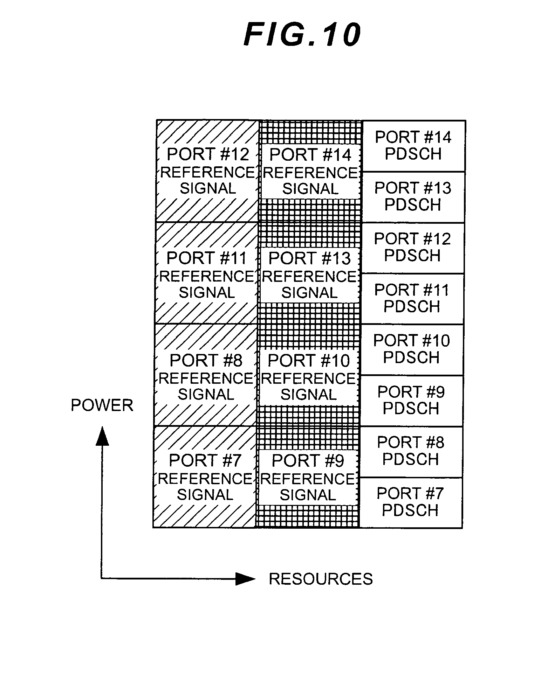

FIG. 10 is a diagram showing resource elements (resources) and respective power in using eight ports of ports #7 to #14 in Embodiment 1 of the invention. The horizontal-axis direction represents resources in the frequency domain or the time domain, and the vertical-axis direction represents power of the resources. Further, FIG. 10 shows resources to which are mapped reference signals of the first port group, reference signals of the second port group, and PDSCHs. In addition, herein, described is the case where power is equally allocated to reference signals or PDSCHs multiplexed in the same resources, corresponding to the multiplexing number in the resources. As described in FIG. 9, the reference signals of the first port group are multiplexed by CDM and therefor, are mapped to the same resources, the reference signals of the second port group are multiplexed by CDM and therefore, are mapped to the same resources, and the PDSCHs of eight ports of ports #7 to #14 are spatially multiplexed, and therefore, are mapped to the same resources. At this point, when the total power every resources is assumed to be the same, as shown in FIG. 10, it is understood that the ratio between power of each reference signal and power of the PDSCH of the corresponding port is "2". Further, the ratio between power of the reference signal and power of the PDSCH of the corresponding port varies according to the state of spatial multiplexing.

In this Embodiment, the control information includes the ratio (power offset value of the PDSCH to the reference signal) between power of the reference signal and power of the PDSCH of the corresponding port, the number of assigned ports (rank number) and information of the assigned ports, and is notified efficiently. Specific signaling will be described below.

FIG. 11 is a diagram showing an example of the control information of the invention. The base station 301 supporting SU-MIMO and MU-MIMO notifies each terminal apparatus 302 of a control signal including the information as shown in FIG. 11. More specifically, for each terminal apparatus 302, the control information includes port and power offset information (data signal identification information) of 5 bits indicating the rank number assigned to the terminal apparatus 302, the port information, and information indicative of the power offset value of the PDSCH to the reference signal, and information (information indicative of parameters related to transmission data) related to the CW1 and CW2 of 16 bits. Herein, the port and power offset information includes the port information assigned to each terminal apparatus 302 by the base station 301, and the power offset information (power information, reference amplitude information) of the reference signal and the PDSCH. Particularly, the power offset information is also used in identifying reference amplitude of the data signal used in demodulation processing in the terminal apparatus 302. Further, for each CW, an MCSI (MCS Indicator) indicative of MCS (Modulation and Coding Scheme) is represented by 5 bits, an NDI (New Data Indicator) indicating whether or not transmission is first transmission is represented by 1 bit, and a RV (Redundancy Version) indicating a puncturing pattern of error correction code is represented by 2 bits. Herein, a combination of predetermined MCSI and RV indicates that the CW is non-transmission (not transmitted). As a specific example, when the MCSI is of MCS of the lowest transmission rate and the RV indicates puncturing of retransmission, it is possible to indicate non-transmission. Hereinafter, a signal including the aforementioned control information is called the control signal.

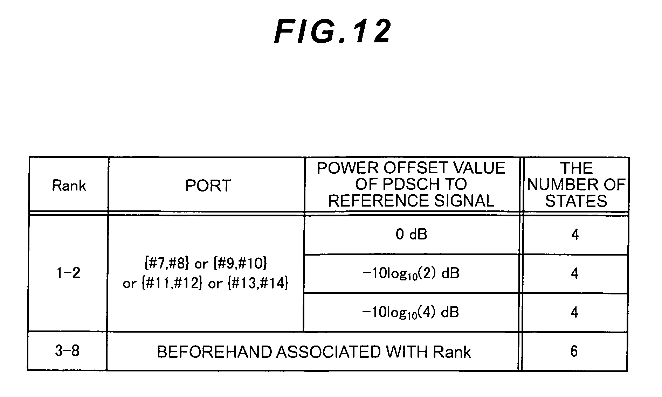

FIG. 12 is a diagram showing an example of states capable of being notified by the port and power offset information in the control information of the invention. In this Embodiment, as described already, in MU-MIMO transmission, each terminal apparatus 302 is assigned either of four pairs of ports #7 and #8, ports #9 and 10, ports #11 and #12, and ports #13 and #14. Therefore, in the example of FIG. 12, when the rank is "1" or "2", transmission is MU-MIMO or SU-MIMO transmission, and the number of states indicative of combinations of assigned ports is "4".

Further, when the power offset value of the PDSCH to the reference signal is set at three kinds, 0 dB, -10log₁₀(2) dB, and -10log₁₀(4) dB, the state indicative of a combination of ports assigned in each kind exists. Furthermore, when the rank number is "3" to "8", since transmission is SU-MIMO transmission, for the rank numbers, assigned ports and the power offset value of the PDSCH to the reference signal are beforehand associated in a one-to-one correspondence. Therefore, the number of states for each rank number is "1". As described above, in the example in FIG. 12, the number of existing states is "18". The number of bits required to notify of one of the states is "5". Herein, log₁₀(X) is a logarithm in base X.

In addition, the states capable of being notified by the port and power offset information in this Embodiment are not limited to the states as shown in FIG. 12. For example, it is possible to further increase or decrease the kinds of power offset values of the PDSCH to the reference signal. Further, by limiting combinations of ports associated with the power offset values of the PDSCH to the reference signal, it is also possible to further decrease the number of states. More specifically, by making the combination of ports associated with the power offset value of the PDSCH to the reference signal of 0dB either of ports #7 and #8 or ports #9 and #10, the number of total states is "16", and it is possible to make a notification by 4 bits.

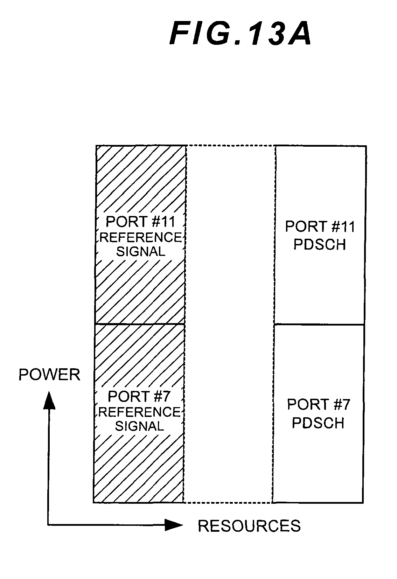

Further, when the rank is "1" or "2", the base station may notify whether the spreading code of the reference signal of the assigned port is of 2 chips or 4 chips. In this case, such information may be control information included in the PDCCH, may be a state of a part of the port and power offset information, or may be notified by control information in a different layer (for example, RRC (Radio Resource Control) signaling). Furthermore, when the rank is "1" or "2", it is also possible to beforehand define that the spreading code is of 4 chips in the terminal apparatus 302. FIGs. 13A to 13C show examples illustrating assignment of ports and power of reference signals and PDSCHs associated with the assignment.

FIG. 13A is a diagram illustrating power of reference signals and PDSCHs associated with assignment of ports #7 and #11 in Embodiment 1 of the invention. At this point, FIG. 13A shows the case where the power offset values of the PDSCH to the reference signal in ports #7 and #11 are respectively 0 dB. In addition, FIG. 13A shows the case where signals are not mapped to resources of the second port group, but PDSCHs of ports #7 and #11 may be mapped.

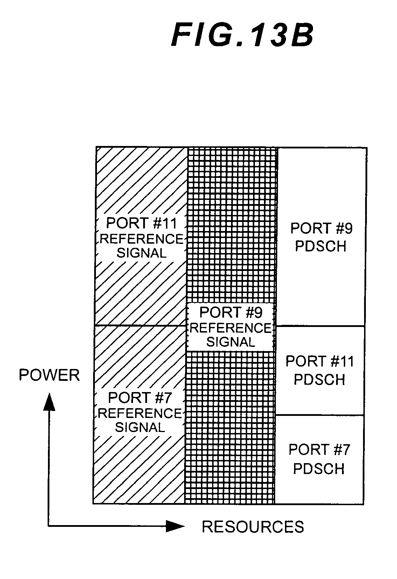

FIG. 13B is a diagram illustrating power of reference signals and PDSCHs associated with assignment of ports #7, #9 and #11 in Embodiment 1 of the invention. At this point, FIG. 13B shows the case where the power offset values of the PDSCH to the reference signal in ports #7, #9 and #11 are -10log₁₀(2) dB.

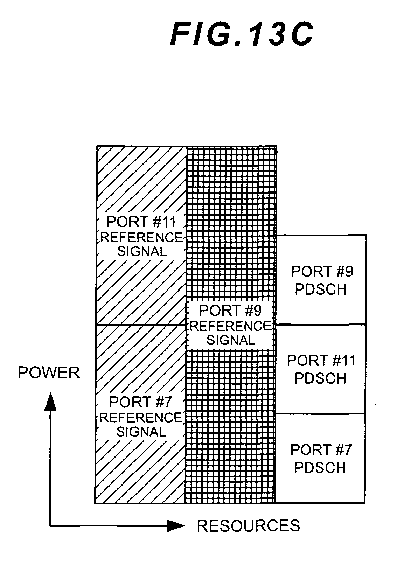

FIG. 13C is another diagram illustrating power of reference signals and PDSCHs associated with assignment of ports #7, #9 and #11 in Embodiment 1 of the invention. At this point, FIG. 13C shows the case where the power offset values of the PDSCH to the reference signal in ports #7 and #11 are -10log₁₀(2) dB, and the power offset value of the PDSCH to the reference signal in the port #9 is -10log₁₀(4) dB. As described above, in SU-MIMO or MU-MIMO transmission when the rank number is "1" or "2", by notifying the power offset value of the PDSCH to the reference signal together with the notification of port assignment, it is possible to perform flexible efficient signal transmission. By this means, since the base station 301 is capable of achieving efficient scheduling, it is possible to improve spectrum efficiency.

Described next is a method of designating the rank number and assigned ports in the case where the rank designation by the port and power offset information is "1" or "2", i.e. in the case where ports are either of four pairs of ports #7 and #8, ports #9 and 10, ports #11 and #12, and ports #13 and #14.

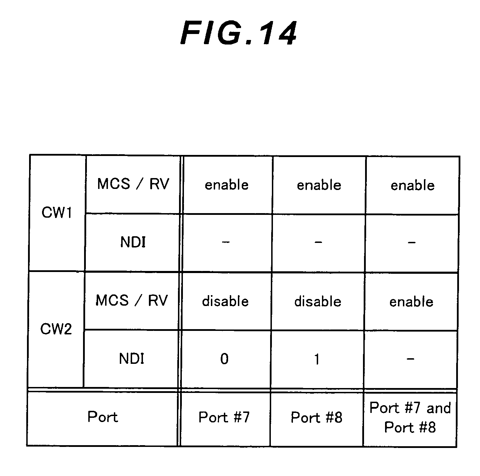

FIG. 14 is a table showing an example of parameters for each CW and ports associated therewith in the case where ports designated by the port and power offset information are ports #7 and #8 in Embodiment 1 of the invention. As shown in FIG. 11, in addition to the port and power offset information, the information indicative of parameters for each CW is also notified, and based on the information, ports are designated.

First, when one CW is transmitted to an arbitrary terminal apparatus 302, i.e. when the rank is "1", the combination of the MCSI and RV of one CW is set at disable (combination indicative of non-transmission), the combination of the MCSI and RV of the other CW is set at enable (combination of any value that is not disable), and either the port #7 or the port #8 is designated by 1 bit of the NDI in the CW set for disable. At this point, it is assumed that the case where the NDI in the CW set for disable is "0" indicates the port #7, and that the case where the NDI in the CW set for disable is "1" indicates the port #8. Further, when two CWs are transmitted to an arbitrary terminal apparatus 302, i.e. when the rank is "2", the combinations of the MCSI and RV of both CWs are set at enable, and the combination of ports #7 and #8 is thereby designated.

Conversely, the terminal apparatus 302 first checks the combinations of the MCSI and RV of CW1 and CW2, and when both combinations are enable, acquires two pieces of port information. Meanwhile, when the combination of the MCSI and RV of one CW is disable, the terminal apparatus 302 checks the NDI of the CW on the disable side, and acquires one piece of port information with the port and power offset information. In addition, FIG. 14 describes only the case of using the CW1 in transmitting one CW to one terminal apparatus 302, and in the case of using the CW2, the combination of the MCSI and RV and the NDI of the CW1 are replaced with the combination of the MCSI and RV and the NDI of the CW2. Further, FIG. 14 explains the case of ports #7 and #8 by the port and power offset information, and any case of ports #7 and #8, ports #9 and #10, ports #11 and #12 is the same.

Thus, in the case where the rank is "1" or "2", it is possible to designate the port using the port and power offset information and the state assigned to the information for each CW. Further, in the case where the rank is "3" or more, it is preferable to beforehand define used ports by the rank number, but it is also possible to designate assigned ports based on the state assigned to the information for each CW as in the case where the rank is "1" or "2".

As described above, by using the method described in this Embodiment, since it is possible to make the information amount of control information the same in both SU-MIMO transmission and MU-MIMO transmission in the terminal apparatus, it is possible to make the detection (blind decoding) method of control information (PDCCH) the same irrespective of transmission scheme. By this means, even in the case of dynamically switching between SU-MIMO and MU-MIMO, since the detection method of control information is the same, it is possible to perform reception control efficiently. Further, since it is made possible to achieve adaptive switching with ease, it is possible to improve spectrum efficiency. Furthermore, by the power offset information of the PDSCH to the reference signal, it is possible to improve reception quality in the mobile terminal. For example, it is possible to easily actualize acquisition of reference amplitude and the like in demodulation processing. Still furthermore, in addition to the notified port and power offset information, based on the state assigned to the information for each CW, it is possible to identify the assigned port.

In addition, the power offset value of the PDSCH to the reference signal in the aforementioned description is for power in one resource element. Therefore, when reference signals are subjected to CDM, it is preferable to further correct the despread value by the spreading factor. In addition, the power offset value with the spreading factor further considered may be notified as the power offset information. In addition, in the above-mentioned description, the method of identifying the port is described, and since the reference signal is mapped together with the transmission data for each port, it is also possible to identify the reference signal. In addition, in the above-mentioned description, described is the case of designating the port using the port and power offset information, and further the state assigned to the information for each CW when the rank is "1" or "2", but the invention is not limited thereto, and it is possible to set respective different states in the port and power offset information.

In addition, described herein is the case of performing MU-MIMO using only orthogonal ports, and also in the case of performing MU-MIMO using quasi-orthogonal sequences, it is possible to perform transmission and reception processing in the similar configuration. In this case, it is configured that the port information includes quasi-orthogonal sequence information, the reference signal generation part 906 beforehand multiplies the reference signal sequence by the quasi-orthogonal sequence, and that the resource element demapping part 1003 divides the RS from the resource element, and then, performs processing for multiplying complex conjugate of the quasi-orthogonal sequence. Further, when MU-MIMO is performed using quasi-orthogonal sequences, the terminal apparatus 302 is capable of having compatibility with the conventional communication system for multiplexing reference signals multiplied by two kinds of quasi-orthogonal codes via two orthogonal ports to transmit. At this point, it is possible to set port groups by multiplied quasi-orthogonal codes. In addition, in the above-mentioned description, described is the case where the maximum number of ports is "8", but the invention is not limited thereto. For example, the invention is applicable to the cases where the maximum number of ports is "2" or "4". Further, the invention is applicable to the case of using only one port group.

In addition, in the above-mentioned description, described is the case where the mobile terminal identifies the port information and the power offset information by being notified of the port and power offset information, but the invention is not limited thereto. In this Embodiment, it is possible to identify the reference amplitude of a data signal and perform demodulation processing, based on the power offset value of the reference signal and the data signal identified by the power offset information. Therefore, as well as the power offset information, it is possible to notify the power information of the data signal such as the information indicative of reference amplitude of the data signal. Further, described is the case where the port and power offset information is control information of a combination of the port information and the power offset information, but the invention is not limited thereto. The port information and the power offset information may be respective independent control information, or may be information combined with another piece of control information.

### (Embodiment 2)

Embodiment 2 of the invention will be described below with reference to drawings. Hereinafter, the difference from Embodiment 1 will be mainly described. This Embodiment describes the case where power of the PDSCH of an OFDM symbol including the reference signal with power amplified (power boost) is different from power of the PDSCH of an OFDM symbol without including the reference signal. Hereinafter, as an example, described is the case of mapping a reference signal (CRS (Cell-specific RS), CSIRS (Channel State Information RS), channel quality measurement reference signal) specific to the base station 301 to a part of resource elements. In addition, the reference signal specific to the base station 301 includes reference signals for the purpose of demodulation of signals such as the PDCCH on which precoding is not performed, generation of feedback information, and the like.

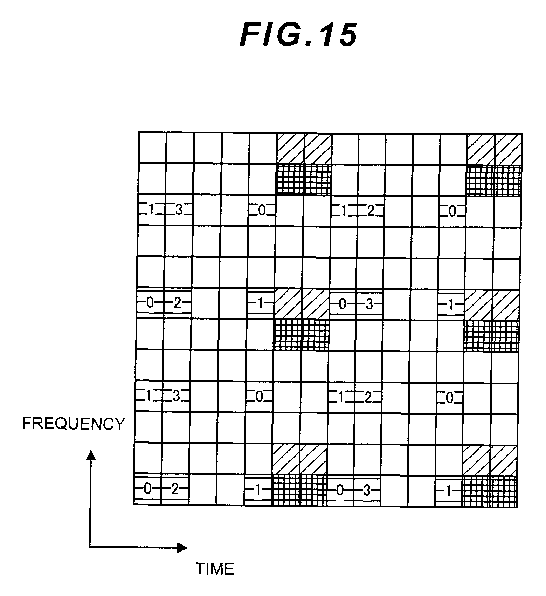

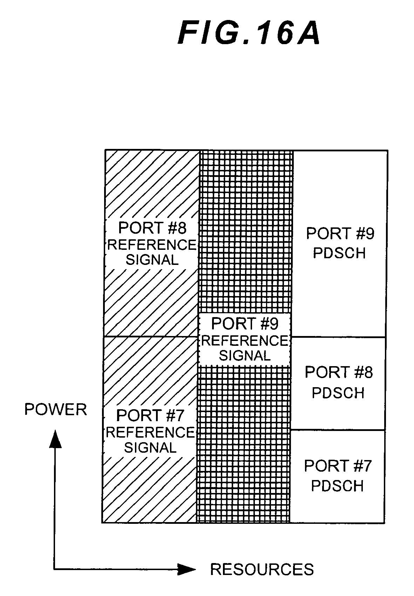

FIG. 15 is a diagram showing details of two RBs aligned as a subframe on the time axis in FIG. 6 in Embodiment 2 of the invention. FIG. 15 shows the case of mappings reference signals specific to the base station 301 in four ports of from ports #0 to #3. In FIG. 15, resource elements shaded by horizontal lines represent reference signals specific to the base station 301, and numerals in the figure show port numbers. FIGs. 16A to 16C show examples illustrating power of reference signals and PDSCHs in the case where ports #7, #8 and #9 are assigned in Embodiment 2 of the invention.

FIG. 16A is a diagram showing an example illustrating power of reference signals and PDSCHs in the case of assigning an OFDM symbol including demodulation reference signals and PDSCHs in Embodiment 2 of the invention. FIG. 16A shows the 6th, 7th, 13rd or 14th OFDM symbol in FIG. 15.

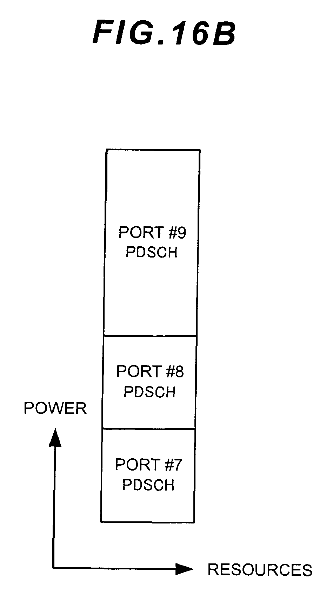

FIG. 16B is a diagram showing an example illustrating power of PDSCHs in the case of assigning an OFDM symbol including only PDSCHs in Embodiment 2 of the invention. FIG. 16B shows the 3rd, 4th, 10th or 11th OFDM symbol in FIG. 15.

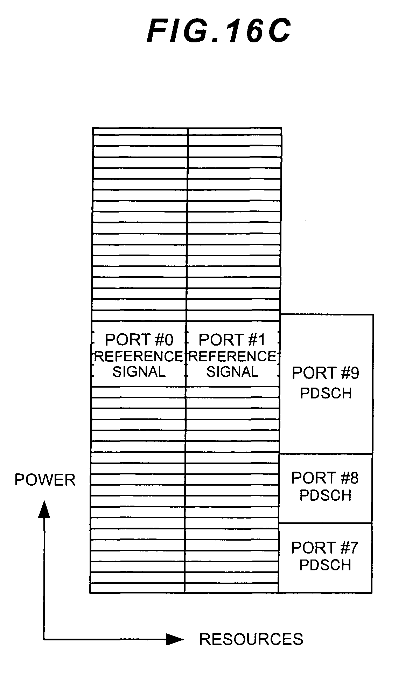

FIG. 16C is a diagram showing an example illustrating power of reference signals and PDSCHs in the case of assigning an OFDM symbol including reference signals specific to the base station 301 of ports #0 and #1 and PDSCHs in Embodiment 2 of the invention. FIG. 16C shows the 1st, 5th, 8th or 12th OFDM symbol in FIG. 15. In addition, OFDM symbols including reference signals specific to the base statin 301 of ports #2 and #3 are the same. As shown in FIG. 16C, when power of reference signals specific to the base station 301 is amplified, power of the PDSCH in the OFDM symbol is decreased. This is because of keeping total power for each OFDM symbol constant.

At this point, as control information specific to the base station 301, notified are the power ratio (ρ_{A}) between the reference signal specific to the base station 301 and the PDSCH shown in FIG. 16C, and the power ratio (ρ_{B}) between the reference signal specific to the base station 301 and the PDSCH shown in FIG. 16A or 16B. More specifically, the ratios are notified in a semi-static manner using a control signal in a different layer (for example, RRC signaling). By using the ρ_{A} and ρ_{B}, it is possible to know the power ratio between the PDSCH shown in FIG. 16C and the PDSCH shown in FIG. 16A or 16B.

By this means, when the terminal apparatus 302 is notified of the power offset value of the PDSCH shown in FIG. 16A to the demodulation reference signal using the port and power offset information as described in Embodiment 1, the terminal apparatus 302 is capable of obtaining the power offset value of the PDSCH shown in FIG. 16C to the demodulation reference signal by calculation. More specifically, the notified power offset value is multiplied by ρ_{A}/ρ_{B}, and the corrected power offset value is the power offset value of the PDSCH shown in FIG. 16 to the demodulation reference signal. By using the above-mentioned method, even when power is amplified in resource elements to which the reference signal specific to the base station 301 or the like is mapped and power of another signal thereby decreases in the OFDM symbol including the signal, only by notifying the power offset value as described in Embodiment 1, it is possible to obtain the power offset value of the signal by calculation, without adding any particular control information. Further, since it is possible to dynamically control the power offset value, it is possible to perform efficient signal transmission.

In addition, in the above-mentioned description, the case is described where the ρ_{A} and ρ_{B} are controlled in a semi-static manner by RRC signaling, and it is also possible to beforehand set the ρ_{A} and ρ_{B} between the base station 301 and the terminal apparatus 302. Further, it is also possible to notify the ρ_{A}, ρ_{B} or the combination thereof as a power offset value as described in Embodiment 1. In this case, the power offset value of the PDSH to the reference signal may be beforehand set, or can be further notified. In addition, the terminal apparatus may be notified of the power offset value of the PDSCH shown in FIG. 16C to the demodulation reference signal to obtain the power offset value of the PDSCH as shown in FIG. 16A or 16C to the demodulation reference signal by calculation.

### (Embodiment 3)

Embodiment 3 of the invention will be described below with reference to drawings. Hereinafter, the difference from Embodiment 1 will be mainly described. This Embodiment describes the case where the notified power offset value is based on the ratio between power of the PDSCH assigned to the terminal apparatus 302 and power of PDSCHs assigned to all terminal apparatuses 302 subjected to MU-MIMO transmission.

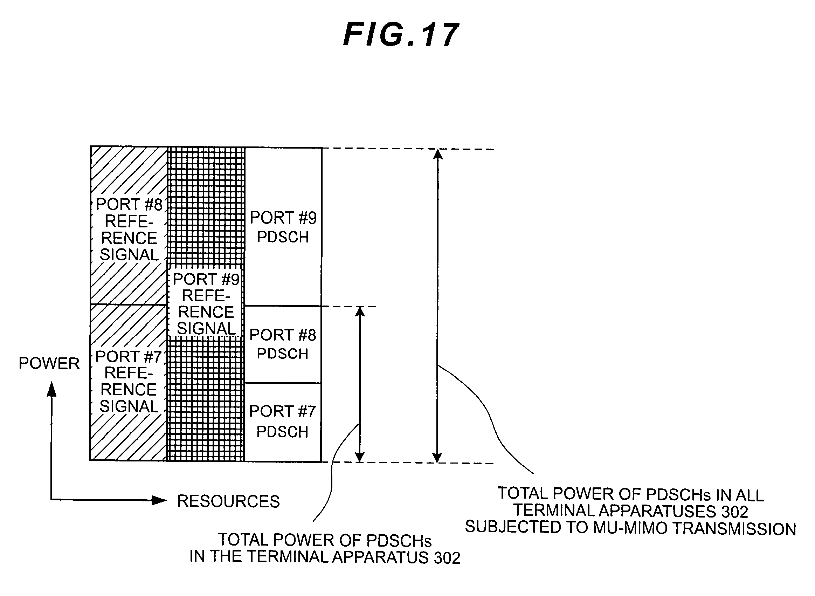

FIG. 17 is a diagram showing an example illustrating assignment of ports and power of reference signals and PDSCHs associated therewith in Embodiment 3 of the invention. At this point, it is assumed that the terminal apparatus 302 is assigned ports #7 and #8, and that the port #9 is assigned to other terminal apparatuses 302. Further, this Embodiment describes the case where the ratio between power of the reference signal and power of the PDSCH is always fixed. In this case, from FIG. 17, it is understood that the ratio between power of the PDSCH assigned to all terminal apparatuses 302 subjected to MU-MIMO transmission and power of the PDSCH in the terminal apparatus 302 assigned the ports #7 and #8 is "2". For the power offset value in this case, -10log₁₀(2) dB is notified as a power offset value to all PDSCHs. Further, as in Embodiment 1, the power offset value is notified to the terminal apparatus 302, as the port and power offset information.

As described above, by notifying the power offset value based on the ratio between power of the PDSCH assigned to the terminal apparatus 302 and power of PDSCHs assigned to all terminal apparatuses 302 subjected to MU-MIMO transmission, irrespective of multiplexing status of MU-MIMO transmission, the terminal apparatus 302 is capable of measuring EPRE (Energy Per Resource Element, power for each resource element). Further, based on the measured EPRE, the terminal apparatus 302 is capable of measuring SINR (Signal per Interference and Noise power Ratio), CQI (Channel Quality Indicator), and the like.

In addition, in each of the above-mentioned Embodiments, the descriptions are given using resource elements and resource blocks as a mapping unit of transmission data, PDSCH, PDCCH and reference signal, and further using subframes and radio frames as a transmission unit in the time domain, but the invention is not limited thereto. It is possible to obtain the same effect even by substituting a region comprised of an arbitrary frequency and time and a time unit therefor. In addition, each of the above-mentioned Embodiments describes the case of performing demodulation using the RSs subjected to the precoding processing, and is described using ports equivalent to layers of MIMO as ports associated with the RSs subjected to the precoding processing, but the invention is not limited thereto. As well as the case, by applying the invention to ports associated with mutually different reference signals, it is possible to obtain the same effect. For example, it is possible to use unprecoded RSs instead of precoded RSs, and as ports, use ports equivalent to output ends subsequent to the precoding processing or ports equivalent to physical antennas (or combination with physical antennas).

The programs that operate in the terminal apparatus 302 and the base station 301 related to the invention are programs (programs to cause the computer to function) which control the CPU and the like so as to actualize the functions of the above-mentioned Embodiments related to the invention. Then, the information handled in the apparatuses is temporarily stored in RAM at the time of the processing, subsequently stored in various kinds of ROM and HDD, and when necessary, read out by the CPU to be modified and rewritten. As a storage medium to store the programs, any medium may be used including semiconductor media (for example, ROM, non-volatile memory card, etc.), optical recoding media (for example, DVD, MO, MD, CD, BD, etc.), magnetic recording media (for example, magnetic tape, flexible disk, etc.) and the like. Further, as well as the case where the functions of the above-mentioned Embodiments are actualized by executing the loaded programs, there is the case where the functions of the invention are actualized by performing the processing in coordination with the operating system, another application program or the like based on instructions of the programs.

Further, in the case of distributing to the market, it is possible to store the programs in a transportable recording medium to distribute, or transfer the programs to a server computer connected via a network such as the Internet. In this case, the storage apparatus of the server computer is also included in the invention. Furthermore, a part or the whole of the terminal apparatus 302 and base station 301 in the above-mentioned Embodiments may be actualized as an LSI that is typically an integrated circuit. Each functional block of the terminal apparatus 302 and base station 301 may be made in chip form separately, or a part or the whole of the blocks may be integrated and made in chip form. Still furthermore, the technique of integrated circuits is not limited to the LSI, and may be achieved by dedicate circuits or general-purpose processor. Moreover, when the technique of integrated circuits as a substitute for the LSI appears as semiconductor techniques progress, it is possible to use the integrated circuit by the technique.

As mentioned above, the Embodiments of the invention are specifically described with reference to the drawings, but specific configurations are not limited to the Embodiments, and design and the like within the scope without departing from the subject matter of the invention are also included in the invention.

### Description of Symbols

- 1, 101, 201, 301: Base station
- 2, 102, 103, 202, 203, 302a-302f, 302: Terminal apparatus
- 901: Coding part
- 902: Scramble part
- 903: Modulation part
- 904: Layer mapping part
- 905: Precoding part
- 906: Reference signal generation part
- 907: Resource element mapping part
- 908: OFDM signal generation part
- 909: Transmission antenna
- 910: Higher layer
- 911: Control information generation part
- 1001: Reception antenna
- 1002: OFDM signal demodulation part
- 1003: Resource element demapping part
- 1004: Filter part
- 1005: Layer demapping part
- 1006: Demodulation part
- 1007: Descramble part
- 1008: Decoding part
- 1009: Higher layer
- 1010: Reference signal measurement part
- 1011: Control information acquisition part

## Claims

1. A transmission apparatus that transmits data by a spatial multiplexing transmission scheme for spatially multiplexing a plurality of ports,
wherein the transmission apparatus generates a reference signal to be transmitted with a data signal, further generates a control signal including port information indicative of at least one of the ports and power information of the data signal, and
transmits the reference signal and the control signal each generated with a port indicated by the port information.

2. The transmission apparatus according to claim 1, wherein the control signal includes data signal identification information that is a combination of the port information and the power information.

3. The transmission apparatus according to claim 1, wherein the power information is power offset information of the reference signal and the data signal.

4. The transmission apparatus according to claim 1, wherein the power information is information indicative of reference amplitude of the data signal.

5. The transmission apparatus according to claim 2, wherein the data signal identification information further includes information indicative of the spatial multiplexing number of the data signal.

6. The transmission apparatus according to claim 2, wherein when the spatial multiplexing number of the data signal is "1" or "2", the port is indicated using the data signal identification information and information indicative of parameters for each codeword that is a cluster of data signals.

7. A reception apparatus that receives data transmitted by a spatial multiplexing transmission scheme for spatially multiplexing a plurality of ports,
wherein the reception apparatus receives a reference signal transmitted with a data signal,
further receives a control signal including port information indicative of at least one of the ports and power information of the data signal, and
identifies the reference signal and the data signal using the control signal.

8. The reception apparatus according to claim 7, wherein the control signal includes data signal identification information that is a combination of the port information and the power information.

9. The reception apparatus according to claim 7, wherein the power information is power offset information of the reference signal and the data signal.

10. The reception apparatus according to claim 7, wherein the power information is information indicative of reference amplitude of the data signal.

11. A communication system in which a transmission apparatus transmits data to a reception apparatus by a spatial multiplexing transmission scheme for spatially multiplexing a plurality of ports,
wherein the transmission apparatus generates a reference signal to be transmitted with a data signal, further generates a control signal including port and power offset information indicative of a combination of information indicative of the reference signal and power offset information of the reference signal and the data signal, and
transmits the reference signal and the control signal each generated to the reception apparatus, and
the reception apparatus receives the reference signal transmitted with the data signal,
further receives the control signal including port and power offset information indicative of a combination of information indicative of the reference signal and power offset information of the reference signal and the data signal, and
identifies the reference signal and the power offset information using the port and power offset information.

12. A communication method in a transmission apparatus that transmits data by a spatial multiplexing transmission scheme for spatially multiplexing a plurality of ports, including at least the steps of:
generating a reference signal to be transmitted with a data signal;
generating a control signal including port and power offset information indicative of a combination of information indicative of the reference signal and power offset information of the reference signal and the data signal; and
transmitting the reference signal and the control signal each generated.

13. A communication method in a reception apparatus that receives data transmitted by a spatial multiplexing transmission scheme for spatially multiplexing a plurality of ports, including at least the steps of:
receiving a reference signal transmitted with a data signal;
receiving a control signal including port and power offset information indicative of a combination of information indicative of the reference signal and power offset information of the reference signal and the data signal; and
identifying the reference signal and the power offset information using the port and power offset information.

14. An integrated circuit installed in a transmission apparatus to cause the transmission apparatus to exert a plurality of functions, causing the transmission apparatus to exert a series of functions of the functions of:
transmitting data by a spatial multiplexing transmission scheme for spatially multiplexing a plurality of ports;
generating a reference signal to be transmitted with a data signal;
generating a control signal including port and power offset information indicative of a combination of information indicative of the reference signal and power offset information of the reference signal and the data signal; and
transmitting the reference signal and the control signal each generated.

15. An integrated circuit installed in a reception apparatus to cause the reception apparatus to exert a plurality of functions, causing the reception apparatus to exert a series of functions of the functions of:
receiving data transmitted by a spatial multiplexing transmission scheme for spatially multiplexing a plurality of ports;
receiving a reference signal transmitted with a data signal;
receiving a control signal including port and power offset information indicative of a combination of information indicative of the reference signal and power offset information of the reference signal and the data signal; and
identifying the reference signal and the power offset information using the port and power offset information.
